# EUROPÄISCHE PATENTSCHRIFT

(11) **EP 1 457 367 B1**
(45) Veröffentlichungstag und Bekanntmachung des Hinweises auf die Patenterteilung: **06.02.2008**
(21) Anmeldenummer: 03005697.2
(22) Anmeldetag: 13.03.2003
(51) Int. Cl.: B60H 1/22, H05B 3/00, F24H 3/00

(54) **Elektrische Heizeinrichtung, insbesondere für ein Kraftfahrzeug**
Electric heating apparatus, particularly for a vehicle
Appareil de chauffage électrique, en particulier pour véhicule

(43) Veröffentlichungstag der Anmeldung: 15.09.2004
(73) Patentinhaber: Behr GmbH & Co. KG, 70469 Stuttgart (DE); Behr France Rouffach SAS, 68250 Rouffach (FR)
(72) Erfinder: Otto, Jürgen, 75428 Illingen (DE); Brun, Michel, 68740 Rustenhart (FR); Laumonnerie, Yannik, 68250 Rouffach (FR); Lucas, Grégory, 68250 Rouffach (FR); Miss, Pascal, 67600 Sélestat (FR); Mougey, Mathieu, 68190 Ensisheim (FR); Schmittheisler, Christophe, 67680 Epfig (FR)
(74) Vertreter: Grauel, Andreas

(56) Entgegenhaltungen:
- EP-A- 0 092 406
- EP-A- 1 130 337
- DE-A- 19 957 452
- DE-C- 4 213 510
- US-A- 4 425 497
- US-A- 4 833 305

## Beschreibung

Die Erfindung betrifft eine elektrische Heizeinrichtung, insbesondere für ein Kraftfahrzeug nach dem Gegenstand der älteren europäischen Patentanmeldung EP 1 407 907.

Derartige Heizeinrichtungen werden bei Kraftfahrzeugen mit verbrauchsoptimierten Motoren als Zusatzheizungen eingesetzt, weil die Verlustwärme des Motors infolge des relativ hohen thermischen Wirkungsgrades nicht zur Beheizung des Fahrgastraumes ausreicht. Durch die DE-A 199 11 547 und die DE-A 199 57 452 wurden unabhängige elektrische Zuheizer bekannt, die als Zusatzteil in eine Heizungsanlage für ein Kraftfahrzeug eingebaut werden, z. B. hinter dem Heizkörper der Heizungsanlage. Diese Zuheizer bestehen aus einem Heizregister oder Heizblock mit einzelnen Heizelementen, zwischen denen Sekundärflächenelemente in Form von Wellrippen angeordnet sind. Wellrippen und Heizelemente sind abwechselnd nebeneinander in einem Rahmen angeordnet und stehen miteinander in wärmeleitendem und elektrischem Kontakt. In der Mitte des Heizblockes ist eine Wellrippe zwischen zwei Heizelementen durch ein Federelement ersetzt, welches eine Verspannung der Heizelemente und der Wellrippen untereinander und gegenüber dem Rahmen bewirkt. Die Heizelemente bestehen aus zwei Elektroden, zwischen denen PTC-Elemente aus einem Keramikwerkstoff angeordnet sind. Nachteilig bei diesen Keramik-PTC-Elementen ist, dass der Werkstoff spröde und zerbrechlich sowie relativ teuer ist. Darüber hinaus benötigen diese Keramik-PTC-Elemente spezielle Halte- oder Befestigungsmittel, z. B. in Form eines Klebers oder Dichtprofils. Dies erhöht den baulichen Aufwand und die Kosten.

Insbesondere die DE19957452 offenbart eine elektrische Heizeinrichtung, für ein Kraftfahrzeug mit einem geschlossenen Rahmen, bestehend aus Längsholmen und Querholmen, mit Heizelementen, bestehend aus zwischen Kontaktblechen angeordneten, elektrisch leitenden PTC-Heizelementen, mit wärmeleitenden, von Luft überströmbaren Sekundärflächenelementen und mit mindestens einem elektrisch leitenden Federelement, wobei die Heizelemente und die Sekundärflächenelemente abwechselnd nebeneinander angeordnet und gegeneinander über die Längsholme und das mittig an Stelle eines Sekundärflächenelementes angeordnete Federelement verspannt sind, wobei die Heizelemente als Heizstäbe und die Kontaktbleche als parallel zueinander angeordnete Blechstreifen ausgebildet sind. Außerdem offenbart dieses Dokument Wulste um die Kontaktbleche.

Durch die US-A 5,206,476 sowie die DE-C 42 13 510 wurden Luftheizeinrichtungen in Form von gitterförmigen Luftausströmern bekannt, die aus einem Kunststoffmaterial, z. B. einem Polymer mit elektrischer Leitfähigkeit und einem so genannten PTC-Effekt hergestellt sind. Der thermische Wirkungsgrad dieser beheizbaren Kunststoffgitter ist vergleichsweise niedrig, u. a. wegen der schlechten Wärmeleitfähigkeit des Kunststoffes.

Es ist Aufgabe der vorliegenden Erfindung, eine elektrische Heizeinrichtung der eingangs genannten Art weiter zu verbessern, insbesondere hinsichtlich der Herstellkosten sowie des fertigungstechnischen und konstruktiven Aufwandes zu reduzieren.

Diese Aufgabe wird durch die Merkmale des Patentanspruches 1 gelöst. Erfindungsgemäß bestehen die PTC-Heizelemente aus einem elektrisch leitenden Kunststoff mit PTC-Effekt, der zwischen als Kontaktblechen ausgebildeten Elektroden als Schicht angeordnet ist. Die keramischen PTC-Elemente sind somit durch eine durchgehende Kunststoffschicht ersetzt, was sowohl zu preislichen als auch zu herstellungstechnischen Vorteilen führt. Der Kunststoff mit PTC-Effekt lässt sich durch ein relativ einfaches Kunststoffspritzverfahren zwischen den Elektroden bzw. Kontaktflächen anbringen und bedarf keiner zusätzlichen Halte- oder Befestigungsmittel. Damit ergeben sich kostengünstige Heizelemente, die zusammen mit Sekundärflächenelementen, z. B. in Form von Wellrippen, in einem Rahmen zu der elektrischen Heizeinrichtung zusammengebaut werden. Die erforderliche Spannung zwischen Heizelementen und Wellrippen zur Erzeugung des wärmeleitenden und elektrischen Kontaktes wird durch ein elektrisch leitendes Federelement aufgebracht, welches anstelle einer Wellrippe im mittleren Bereich zwischen zwei Heizelementen angeordnet ist. Damit können Heizelemente und Wellrippen kraftschlüssig im Rahmen gehalten werden.

Vorteilhafte Ausgestaltungen der Erfindung ergeben sich aus den Unteransprüchen. Beispielsweise besteht der Kunststoff mit PTC-Effekt aus einem PP, PE, EVA, oder PA mit elektrisch leitenden Partikeln, z. B. so genanntem Leitruß. Dieser Kunststoff ist spritzfähig, sodass ein Heizelement, welches im Wesentlichen aus zwei Kontaktblechen und einer dazwischen liegenden Kunststoffschicht besteht, in einem einfachen Fertigungsprozess durch Umspritzen hergestellt werden kann. An den Enden der Kontaktbleche befinden sich Kontaktanschlüsse, über welche die Heizstäbe mittels einer geeigneten elektrischen Schaltung mit Strom versorgt werden. Die Schichtdicke zwischen zwei Elektroden ist maßgeblich für den elektrischen Widerstand und damit für die Heizwirkung. In Verbindung mit den genannten Kunststoffmaterialen ist eine Schichtdicke von 1 bis 2 mm für die geforderte Heizleistung im Rahmen einer Bordnetzstromversorgung vorteilhaft.

Ein Ausführungsbeispiel der Erfindung ist in der Zeichnung dargestellt und wird im Folgenden näher beschrieben Es zeigen:
- Fig. 1: eine elektrische Zusatzheizung in Form eines Heizblockes,
- Fig. 2: ein Heizelement des Heizblockes gemäß Fig. 1 in einer Seitenansicht,
- Fig. 3: das Heizelement gemäß Fig. 2 in einer Draufsicht und
- Fig. 4: einen Schnitt längs der Linie IV-IV in Fig. 3 in vergrößerter Darstellung.

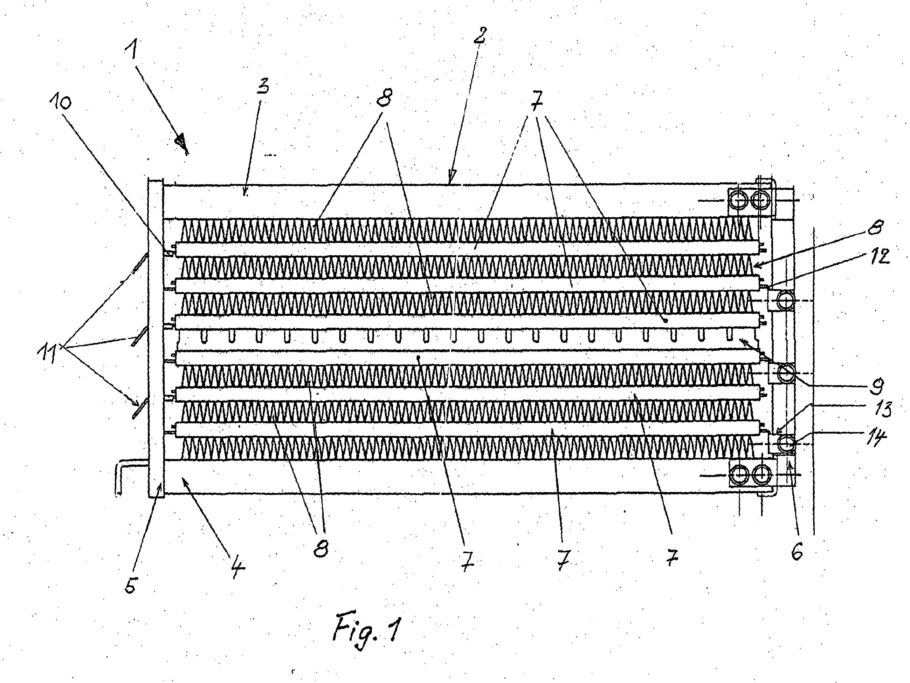

**Fig. 1** zeigt eine elektrische Zusatzheizeinrichtung in Form eines Heizblokkes 1, welcher in einer Heizungs- oder Klimaanlage für ein Kraftfahrzeug eingebaut werden kann. Dieser Heizblock 1 dient der Erwärmung von Luft, die dem Fahrzeuginnenraum zugeleitet wird. Der Heizblock 1 besteht aus einem Rahmen bzw. Einbaurahmen 2, welcher zwei Längsholme 3, 4 und zwei Querholme 5, 6 aufweist. Parallel zu den Längsholmen 3, 4 sind stabförmige Heizelemente 7 abwechselnd mit Wellrippen 8 angeordnet. Im mittleren Bereich des Heizblockes 1 zwischen zwei Heizelementen 7 ist ein metallisches, d. h. elektrisch leitendes Federelement 9 angeordnet, welches auf die beiden benachbarten Heizelemente 7 eine gleichmäßig über deren Länge verteilte Federkraft in Richtung auf die Längsholme 3, 4 ausübt. Die Heizelemente 7 sowie die Wellrippen 8, die nur in metallischem Kontakt miteinander stehen, werden somit gegeneinander verspannt, sodass der für eine gute Wärmeleitung und einen guten elektrischen Kontakt erforderliche Anpressdruck erzeugt wird. Eine Hälfte der insgesamt sechs Heizelemente 7, deren detaillierter Aufbau unten genau beschrieben wird, weist Anschlusskontakte 10 auf, die mit Plussteckern 11 verbunden sind. Die andere Hälfte der Heizelemente 7 weist auf der den Plussteckern 11 gegenüberliegenden Seite Anschlusskontakte 12 auf, die über eine Klemme 13 und eine Blechschraube 14 mit dem als Minuspol ausgebildeten Querholm 6 verbunden sind, wobei der Querholm 6 an Masse im Fahrzeug angeschlossen ist.

Die elektrische Verschaltung der Heizelemente 7 erfolgt ähnlich wie in der älteren europäischen Anmeldung Nr. 02 292 464.1 beschrieben, d. h. die Heizelemente 7 werden abwechselnd an Plus und Minus angeschlossen, sodass der Strom jeweils von einem Heizelement 7 zum benachbarten über die Wellrippen 8 fließt.

Wie bereits erwähnt, kann dieser Heizblock 1 in einen nicht dargestellten Luftkanal einer Heizungsanlage eingebaut werden, sodass die Luft durch die Wellrippen 8 strömt und dabei erwärmt wird. Die Wellrippen 8 führen somit die in den Heizelementen 7 erzeugte Wärme an die Luft ab und wirken daher als Sekundärflächenelemente zur Vergrößerung der Wärmeübertragungsfläche. Damit ist eine wirksame und schnelle Beheizung der Luft gewährleistet. Der Heizblock 1 kann an beliebiger Stelle in den nicht dargestellten Luftströmungskanal oder auch direkt an einem nicht dargestellten Heizkörper der Heizungsanlage montiert werden.

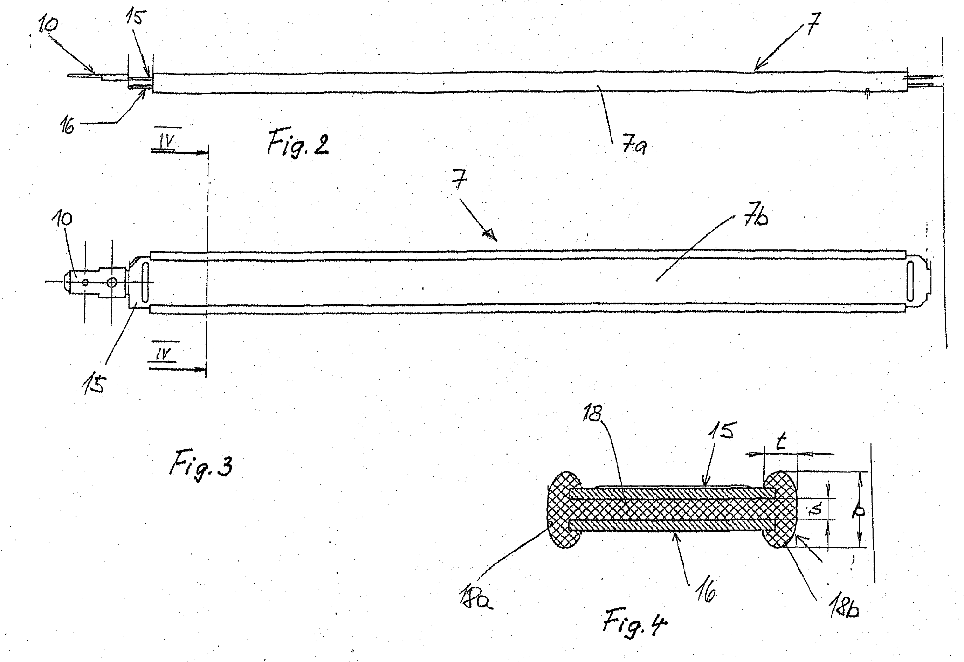

**Fig. 2** zeigt ein Heizelement 7 als Einzelteil in einer Ansicht von der Seite, d. h. mit Blick auf eine Schmalseite 7a. Das Heizelement weist zwei Elektroden 15, 16 auf, wobei eine Elektrode 15 den Anschlusskontakt 10 (vgl. Fig. 1) aufweist. Die andere Elektrode 16 weist keinen Anschusskontakt auf.

**Fig. 3** zeigt das Heizelement 7 in einer Draufsicht, d. h. mit Blick auf eine Breitseite 7b, die durch die durchgehende Elektrode 15 mit dem Anschlusskontakt 10 gebildet wird.

**Fig. 4** zeigt einen Querschnitt längs der Linie IV-IV in Fig. 3 durch das Heizelement 7. Der Querschnitt der beiden Elektroden 15, 16 ist rechteckförmig, d. h. die beiden Elektroden 15, 16 sind aus Blechstreifen, vorzugsweise aus einer Aluminiumlegierung hergestellt. Zwischen beiden Blechstreifen 15, 16 ist eine Kunststoffschicht 18 mit der Dicke s = 1,4 mm angeordnet, wobei s dem Abstand der beiden Elektroden 15, 16 entspricht. Die Kunststoffschicht 18 setzt sich nach außen über die Längskanten der Elektroden 15, 16 hinaus in zwei äußere Wulste 18a, 18b der Breite b und der Tiefe t fort. Die beiden Wulste 18a, 18b umschließen somit die Längskanten der beiden Elektroden 15, 16 und halten diese wie eine Klammer zusammen. Die Kunststoffschicht 18 in Verbindung mit den beiden Wulsten 18a, 18b bildet daher eine mechanische Verbindung für die beiden Kontaktbleche 15, 16, die im Übrigen zur Verbesserung der elektrischen und thermischen Leitfähigkeit eine spezielle Struktur oder Aufrauhung aufweisen können. Man erkennt im Übrigen aus dieser Querschnittsdarstellung, dass das Heizelement 7 spritztechnisch äußerst einfach herstellbar ist, indem die beiden Kontaktbleche 15, 16 in einer Spritzform positioniert und dann mit dem Kunststoff umspritzt werden. Die äußeren Flächen der Kontaktelemente 15, 16 bleiben frei, damit sich ein guter thermischer und elektrischer Kontakt zu den hier nicht dargestellten Wellrippen 8 ergibt.

Zur Ergänzung dieser Anmeldung, insbesondere im Hinblick auf die für die Heizelemente 7 verwendeten Kunststoffe mit PTC-Effekt sowie ihre physikalischen Eigenschaften wird auf die ältere europäische Anmeldung EP 1 407 907.

## Patentansprüche

1. Elektrische Heizeinrichtung, insbesondere für ein Kraftfahrzeug
- mit einem geschlossenen Rahmen (2), bestehend aus Längsholmen (3, 4) und Querholmen (5, 6),
- mit Heizelementen (7), bestehend aus zwischen Kontaktblechen (15, 16) angeordneten, elektrisch leitenden Kunststoffschichten (18) mit PTC-Effekt,
- mit wärmeleitenden, von Luft überströmbaren Sekundärflächenelementen (8) und
- mit mindestens einem elektrisch leitenden Federelement (9),
wobei die Heizelemente (7) und die Sekundärflächenelemente (8) abwechselnd nebeneinander angeordnet und gegeneinander über die Längsholme (3, 4) und das mittig an Stelle eines Sekundärflächenelementes (8) angeordnete Federelement (9) verspannt sind, wobei die Heizelemente als Heizstäbe (7) und die Kontaktbleche als parallel zueinander angeordnete Blechstreifen (15,1 6) ausgebildet sind und die Kontaktbleche (15, 16) vom Kunststoff (18a, 18b) teilweise umspritzt sind, wobei die Heizelemente (7) Schmalseiten (7a) aufweisen und dass die Kontaktbleche (15, 16) im Bereich der Schmalseiten (7a) vom Kunststoff derart umspritzt sind, dass beiderseits Wulste (18a, 18b) gebildet sind, die eine mechanische Verbindung zwischen den Kontaktblechen (15, 16) bilden.

2. Heizeinrichtung nach Anspruch 1, **dadurch gekennzeichnet, dass** die Sekundärflächenelemente als Wellrippen (8) ausgebildet sind, die in metallischer Verbindung mit den Kontaktblechen (15, 16) stehen.

3. Heizeinrichtung nach einem der Ansprüche 1 oder 2, **dadurch gekennzeichnet, dass** das Federelement als luftdurchlässige Metallfeder (9) ausgebildet ist.

4. Heizeinrichtung nach einem der Ansprüche 1 bis 3, **dadurch gekennzeichnet, dass** das Kontaktblech (15) entweder als Plus-Elektrode mit einem Plus-Anschlusskontakt (10) oder als Minus-Elektrode mit einem Minus-Anschlusskontakt (12) ausgebildet ist und dass die Plus-Anschlusskontakte (10) mit Plussteckern (11) und die Minus-Anschlusskontakte (12) mit einer Minusschiene (6) verbunden sind.

5. Heizeinrichtung nach Anspruch 4, **dadurch gekennzeichnet, dass** die Plusstecker (11) an dem Querholm (5) angeordnet sind und die Minusschiene durch den Querholm (6) gebildet ist.

6. Heizeinrichtung nach einem der Ansprüche 1 bis 5, **dadurch gekennzeichnet, dass** der Kunststoff ein PP, PE, EVA, PA mit leitenden Partikeln, insbesondere Leitruß ist.

7. Heizeinrichtung nach einem der Ansprüche 1 bis 6, **dadurch gekennzeichnet, dass** die Kunststoffschicht (18) zwischen den Kontaktblechen (15, 16) eine Dicke s im Bereich von 1 bis 2 mm aufweist.

## Claims

1. An electric heating device, in particular for a motor vehicle
- having a closed frame (2) comprising longitudinal members (3, 4) and cross members (5,6),
- having heating elements (7) comprising electrically conductive plastic layers with a PTC effect (18) arranged between contact plates (15, 16),
- having heat-conducting secondary surface elements (8) over which air can flow, and
- having at least one electrically conductive spring element (9),
- whereby the heating elements (7) and the secondary surface elements (8) are arranged adjacent to one another an alternating fashion and being braced against one another via the longitudinal members (3, 4) and the spring element (9) which spring element is arranged centrally in place of a secondary surface element (8), whereby the heating elements comprise heating rods (7) and the contact plates comprise sheet-metal strips (15,16) disposed parallel to one another and are in part coated with plastic, wherein the heating elements (7) have narrow sides and the contact plates (15,16) in the region of the narrow sides are coated in such a way that beads (18a,18b) are formed on both sides, such that a mechanical connection is formed between the contact plates (15,16).

2. A heating device according to Claim 1, **characterized in that** the secondary surface elements comprise corrugated ribs (8) which have a metallic connection to the contact plates (15, 16).

3. A heating device according to Claim 1 or Claim 2, , **characterized in that** the spring element comprises an air permeable metal spring (9).

4. A heating device according to any one of Claims 1 to 3, , **characterized in that** the contact plate (15) comprises either a positive electrode with a positive connecting contact (10) or as a negative electrode with a negative connecting contact (12), and **in that** the positive connecting contacts (10) are connected to positive plugs (11), and the negative connecting contacts (12) are connected to a negative rail (6).

5. A heating device according to Claim 4, **characterized in that** the positive plugs (11) are arranged on the cross member (5) and the negative rail is formed by the cross member (6).

6. A heating device according to any one of Claim 1 to 5, , **characterized in that** the plastic is a PP, PE, EVA or PA with conductive particles, in particular conductive carbon black.

7. A heating device according to any one of Claims 1 to 6, **characterized in that** the plastic layer (18) between the contact plates (15, 16) has a thickness s in the range from 1 to 2 mm.

## Revendications

1. Dispositif de chauffage électrique, en particulier pour un véhicule, comprenant
■ un cadre fermé (2), constitué de traverses longitudinales (3, 4) et de traverses transversales (5, 6),
■ des éléments chauffants (7), constitués de couches de plastique électroconductrices (18) disposées entre des lames de contact (15, 16) présentant un effet CTP,
■ des éléments de surface secondaire (8) thermoconducteurs pouvant être balayés par l'air et
■ au moins un élément de ressort (9) électro-conducteur,
les éléments chauffants (7) et les éléments de surface secondaire (8) étant disposés de manière alternée les uns à côté des autres et étant calés les uns contre les autres par l'intermédiaire de traverses longitudinales (3, 4) et de l'élément de ressort (9) disposé de manière centrale à la place d'un des éléments de surface secondaire (8), les éléments chauffants étant réalisés sous forme de tiges chauffantes (7) et les lames de contact sous forme de bandes de tôle (15, 16) disposées parallèlement l'une à l'autre et les bandes de tôle (15, 16) étant partiellement formées par moulage par injection de plastique (18a, 18b), les éléments chauffants (7) présentant des côtés étroits (7a), et les lames de contact (15, 16) étant formées par moulage par injection de plastique dans la zone des côtés étroits (7a) de sorte que des renflements (18a, 18b) sont formés des deux côtés, lesquels forment ainsi une liaison mécanique entre les lames de contact (15, 16).

2. Dispositif de chauffage selon la revendication 1, **caractérisé en ce que** les éléments de surface secondaire sont réalisés sous la forme de nervures ondulées (8), qui sont en liaison métallique avec les lames de contact (15, 16).

3. Dispositif de chauffage selon la revendication 1 ou 2, **caractérisé en ce que** l'élément de ressort est réalisé sous forme de ressort métallique perméable à l'air (9).

4. Dispositif de chauffage selon l'une quelconque des revendications 1 à 3, **caractérisé en ce que** la lame de contact (15) est réalisée soit en tant qu'électrode positive avec un contact de connexion positif (10) soit en tant qu'électrode négative avec un contact de connexion négatif (12), et **en ce que** les contacts de connexion positifs (10) sont reliés à des fiches positives (11) et les contacts de connexion négatifs (12) à un rail (6) négatif.

5. Dispositif de chauffage selon la revendication 4, **caractérisé en ce que** les fiches positives (11) sont disposées sur la traverse transversale (5) et **en ce que** le rail négatif est formé par la traverse transversale (6).

6. Dispositif de chauffage selon l'une quelconque des revendications 1 à 5, **caractérisé en ce que** le plastique est un PP, PE, EVA, PA comprenant des particules conductrices, en particulier de suie conductrice.

7. Dispositif de chauffage selon l'une quelconque des revendications 1 à 6, **caractérisé en ce que** la couche de plastique (18) présente, entre les lames de contact (15, 16), une épaisseur s comprise dans la plage allant de 1 à 2 mm.
